# EUROPÄISCHE PATENTSCHRIFT

(11) **EP 3 492 291 B1**
(45) Veröffentlichungstag und Bekanntmachung des Hinweises auf die Patenterteilung: **09.09.2020**
(21) Anmeldenummer: 18205177.1
(22) Anmeldetag: 08.11.2018
(51) Int. Cl.: B60D 1/36, B60D 1/62, B60K 35/00, G01C 11/00, B60R 1/00

(54) **VERFAHREN ZUM BETREIBEN EINER BEDIENVORRICHTUNG FÜR EIN KRAFTFAHRZEUG, UM EINEN FAHRER BEIM ANKUPPELN DES KRAFTFAHRZEUGS AN EINEN ANHÄNGER ZU UNTERSTÜTZEN, SOWIE BEDIENVORRICHTUNG UND KRAFTFAHRZEUG**
METHOD FOR OPERATING AN OPERATING DEVICE FOR A MOTOR VEHICLE TO SUPPORT A DRIVER WHEN COUPLING THE MOTOR VEHICLE TO A TRAILER, OPERATING DEVICE AND MOTOR VEHICLE
PROCÉDÉ DE FONCTIONNEMENT D'UN DISPOSITIF DE COMMANDE POUR UN VÉHICULE AUTOMOBILE POUR AIDER UN CONDUCTEUR LORS DE L'ATTELAGE D'UNE REMORQUE AU VÉHICULE AUTOMOBILE ET DISPOSITIF DE COMMANDE ET VÉHICULE AUTOMOBILE

(30) Priorität: 29.11.2017 DE 102017221458
(43) Veröffentlichungstag der Anmeldung: 05.06.2019
(73) Patentinhaber: VOLKSWAGEN AKTIENGESELLSCHAFT, 38440 Wolfsburg (DE)
(72) Erfinder: Hüger, Philipp, 38471 Rühen (DE); Ziebart, Sascha, 38104 Braunschweig (DE)

(56) Entgegenhaltungen:
- DE-A1-102007 039 687
- DE-A1-102009 045 284
- GB-A- 2 447 672
- US-A1- 2002 149 673

## Beschreibung

Die Erfindung betrifft ein Verfahren zum Betreiben einer Bedienvorrichtung für ein Kraftfahrzeug, um einen Fahrer dabei zu unterstützen, das Kraftfahrzeug zum Ankuppeln an einem Anhänger an diesen heran zu manövrieren. Zu der Erfindung gehört auch eine Bedienvorrichtung, die gemäß dem Verfahren betrieben werden kann. Die Bedienvorrichtung kann beispielsweise als ein Infotainmentsystem (Informations-Unterhaltungssystem) oder ein Smartphone ausgestaltet sein. Schließlich umfasst die Erfindung auch ein Kraftfahrzeug mit der erfindungsgemäßen Bedienvorrichtung.

Ein Kraftfahrzeug kann eine Anhängerkupplung aufweisen, an die ein Anhänger angekuppelt werden kann, sodass sich ein Gespann aus Kraftfahrzeug und Anhänger ergibt. Das Kraftfahrzeug kann dann den Anhänger schleppen. Zum Ankuppeln eines solchen Anhängers ist es notwendig, zielgerichtet mit dem Kraftfahrzeug an die Deichsel des Anhängers heran zu fahren. Während es dabei bei leichten Anhängern ausreicht, dass das Kraftfahrzeug in der Nähe der Deichsel angehalten wird, weil man dann den Anhänger das letzte Wegstück zum Kraftfahrzeug schieben oder ziehen kann, bis die Kralle der Deichsel über den Kugelkopf der Anhängerkupplung positioniert ist und somit der Anhänger an das Kraftfahrzeug angekuppelt werden kann, ist dies bei schweren Anhängern nicht möglich. Bei schweren Anhängern muss das Kraftfahrzeug zielgerichtet bis zu einer Ankuppelposition manövriert und dort angehalten werden. Die Ankuppelposition ergibt sich, wenn die besagte Kralle der Deichsel senkrecht über den Kugelkopf der Anhängerkupplung positioniert ist, sodass die Deichsel nur noch abgesenkt werden muss, damit der Anhänger an das Kraftfahrzeug angekuppelt wird. Hierdurch wird einem Benutzer das Verschieben oder Drehen oder Rollen des Anhängers erspart.

Damit ein Fahrer eines Kraftfahrzeugs dieses in die besagte Ankuppelposition manövrieren kann, muss er abschätzen, wann die Anhängerkupplung sich unterhalb des Kugelkopfs der Deichsel befindet. Hierzu kann er beispielsweise eine Rückfahrkamera nutzen, welche die Umgebung des Kraftfahrzeugs im Bereich des Hecks filmt und zumindest ein Kamerabild dem Fahrer auf einer Anzeigeeinrichtung anzeigt. Dennoch bleibt als wesentliches Problem das Erkennen, wann die Ankuppelposition erreicht ist. Grund dafür ist, dass je nach eingestellter Deichselhöhe, die mit einer Kurbel variiert werden kann, im Kamerabild die Entfernung der Deichsel anders erscheint. Wenn die Deichsel hoch eingestellt ist, scheint es, man müsse noch weiter fahren, während bei niedrig eingestellter Deichsel eine relative Position zur Anhängerkupplung einfacher eingeschätzt werden kann.

Aus der EP 2 987 663 A1 ist hierzu bekannt, speziell für das Unterstützen des Manövrierens des Kraftfahrzeugs beim Ankuppeln eines Anhängers eine eigene Videokamera an einem Kraftfahrzeug vorzusehen, deren optische Achse horizontal und in Richtung der Fahrzeuglängsachse ausgerichtet ist. Allerding ist bei dieser Konstellation die Entfernung des Anhängers im Kamerabild schwierig abzuschätzen, da sich eine direkte Draufsicht auf die Anhängerdeichsel ergibt. Bei der in der Druckschrift beschriebenen Maulkupplung wird dies dadurch kompensiert, dass das Kraftfahrzeug bis zum Anschlag unter den Anhänger gefahren werden kann, sodass im Fangmaul der Maulkupplung der Kupplungsbolzen einrastet.

Für das Ankuppeln eines Kraftfahrzeugs an einen Anhänger, der nicht selbstständig in einer Maulkupplung einrastet, ist aus der DE 602 19 904 T2 bekannt, in das Kamerabild einer Rückfahrkamera Hilfslinien einzublenden, welche den Abstand des Kraftfahrzeugs zu einer im Kamerabild sichtbaren Anhängerkupplung visualisieren. Für das Manövrieren des Kraftfahrzeugs auf den letzten Zentimetern (beispielsweise im Bereich näher als 0,5 Meter zu der beschriebenen Ankuppelposition) weisen diese Hilfslinien allerdings nur ein grobes Raster auf. Um dies zu kompensieren, wird gemäß dem Stand der Technik das Raster der Hilfslinien in Abhängigkeit vom Abstand zum Anhänger verändert. Zudem kann ein Zoomfaktor der Kamera vergrößert werden, wenn sich der Anhänger näher als einen Meter vom Kraftfahrzeug entfernt befindet. Die Abstandsschätzung des Abstands des Kraftfahrzeugs zur Deichsel des Anhängers muss ein Fahrer dann anhand des vergrößerten Kamerabilds selbst vornehmen. Hierzu wird eine künstlich berechnete Draufsicht auf die Anhängerkupplung und die Deichsel angezeigt.

Da man bei einer künstlich berechneten Draufsicht den Höhenunterschied zwischen Deichsel und Anhängerkupplung nicht erkennen kann, ist gemäß der DE 11 2014 004 554 T5 vorgesehen, bei einem System zum Ankuppeln eines Anhängers an ein Kraftfahrzeug zusätzlich zu der künstlich erzeugten Draufsicht eine Höhenschätzung bereitzustellen, die die relative Höhe zwischen der Anhängerkupplung des Kraftfahrzeugs und dem Anhängerkoppler des Anhängers ermittelt und Alarm schlägt, wenn die relative Höhe geringer ist als ein vorbestimmter Schwellenwert.

Ebenfalls bekannt ist die US 2002/149673 A1. Sie stellt den nächstliegenden Stand der Technik dar und offenbart ein Verfahren zum Anzeigen eines Kamerabilds einer Rückfahrkamera, die den Fahrer beim Ankuppeln des Kraftfahrzeugs an einen Anhänger unterstützen soll. Zur besseren Übersicht für den Fahrer wird dabei im Nahbereich um den Anhänger das normale Kamerabild in ein Kamerabild aus einer Vogelperspektive (künstlich erzeugte Draufsicht) umgerechnet und angezeigt. In das Kamerabild sind dabei Hilfslinien mit Markern, die einen Abstand zu dem Anhänger darstellen, eingefügt. Bei Unterschreiten eines bestimmten Abstands zu dem Anhänger wird das gesamte Kamerabild inklusive der Hilfslinien dann zusätzlich noch vergrößert oder gezoomt.

Während somit gemäß dem Stand der Technik durch Zoomen eines Kamerabilds und durch eine künstlich berechnete Draufsicht das Manövrieren unterstützt wird, muss der Fahrer hierbei stets selbst noch einschätzen, wie weit und wie schnell er mit dem Kraftfahrzeug an die finale Ankuppelposition heranfahren soll. Zudem muss er sich darauf verlassen, dass die künstlich berechnete Draufsicht die Entfernungsverhältnisse korrekt darstellt.

Der Erfindung liegt die Aufgabe zugrunde, einen Fahrer eines Kraftfahrzeugs zu unterstützen, während der Fahrer das Kraftfahrzeug an einen Anhänger heran manövriert, um den Anhänger an das Kraftfahrzeug ankuppeln zu können.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Betreiben einer Bedienvorrichtung für ein Kraftfahrzeug bereitgestellt. Mittels des Verfahrens wird ein Fahrer dabei unterstützt, das Kraftfahrzeug zum Ankuppeln an einem Anhänger an diesen heran zu manövrieren. Durch die besagte Bedienvorrichtung werden hierzu Zielkoordinaten einer Ankuppelposition ermittelt, die für das Kraftfahrzeug zum Ankuppeln vorgesehen ist. In der Ankuppelposition kann in der besagten Weise die Bedingung erfüllt sein, dass der Anhänger bereits durch Absenken seiner Deichsel des Anhängers unmittelbar mit der Anhängerkupplung verbunden werden kann. Mit anderen Worten ist in der Ankuppelposition kein Verschieben des Anhängers mehr nötig, um das Ankuppeln zu vollenden. Damit der Fahrer weiß, wie weit das Kraftfahrzeug noch von der Ankuppelposition entfernt ist, bekommt der Fahrer ein graphisches Abstandselement angezeigt. Ein solches Abstandselement kann beispielsweise der an sich bekannte "Abstandsbalken", also ein Bargraph, sein. Während mittels einer Anzeigeeinrichtung dem Fahrer das graphische Abstandselement angezeigt wird, wird wiederholt ein aktueller Abstandswert des Abstands des Kraftfahrzeugs zu der Ankuppelposition ermittelt und ein vorbestimmter Größenparameter des graphischen Abstandsanzeigeelements in Abhängigkeit von dem aktuellen Abstandswert eingestellt. Im Falle eines Abstandsbalkens kann also beispielsweise als Größenparameter die Länge in Abhängigkeit vom Abstandswert eingestellt werden. Der Abstandsbalken kann sich also verkürzen, während sich der Abstand des Kraftfahrzeugs von der Ankuppelposition verringert. Die Bedienvorrichtung kennt also die Zielkoordinaten der Ankuppelposition und informiert den Fahrer mittels des Abstandsanzeigeelements, wie weit das Kraftfahrzeug noch von der Ankuppelposition entfernt ist. Der Fahrer kann dann mittels einer Längsführung (Beschleunigen und Abbremsen) das Kraftfahrzeug an die Ankuppelposition heran fahren. Die Querführung (Lenken) kann vom Fahrer selbst oder von einem Fahrerassistenzsystem vorgenommen oder durchgeführt werden.

Nun muss aber der Fahrer auf den letzten Zentimetern das Fahrzeug sehr genau positionieren können, damit die Anhängerkupplung zentimetergenau unter der Deichsel zum Stehen kommt oder positioniert wird. Andererseits muss der Abstand aber auch schon dann angezeigt werden können, wenn sich das Kraftfahrzeug noch in einer Entfernung von mehr als 50 cm oder mehr als 1 m Entfernung befindet. Repräsentiert also die volle Länge oder allgemein der volle Wert des Größenparameters den maximalen anzeigbaren Abstand (z.B. 5 m), so wird das Abstandsanzeigeelement beim Manövrieren auf den letzten Zentimetern (Abstand kleiner als 50 cm oder Abstand kleiner als 30 cm) verhältnismäßig klein dargestellt, sodass eine Abstandsänderung in einem Nachbereich kleiner als 10 cm auf der Anzeigeeinrichtung vom Fahrer schwierig zu erkennen ist. Ist ein Abstandsbalken z.B. 5 cm lang und soll dies einem Abstand A von 5 m entsprechen, so ergibt sich im Falle einer lineare Skalierfunktion (5 m → 5 cm) bei einem verbleibenden Abstand A vom 5 cm eine Balkenlänge von 0,5 mm. Eine Rollstrecke von 10 cm wäre nicht mehr wahrnehmbar darstellbar.

Um dies zu vermeiden, ist erfindungsgemäß vorgesehen, dass für eine Umrechnung von dem jeweils ermittelten aktuellen Abstandswert zu dem einzustellenden Wert des Größenparameters nicht einfach eine lineare Skalierfunktion verwendet wird, welche den ermittelten Abstandswert in einen Wert des Größenparameters, beispielsweise eine Länge des graphischen Abstandselements, umrechnet. Vielmehr wird für die Umrechnung von dem jeweils ermittelten aktuellen Abstandswert zu dem einzustellenden Wert des Größenparameters eine nicht-lineare Skalierfunktion verwendet, welche in einem vorbestimmten Umgebungsbereich um die Ankuppelposition, also beispielsweise in einem Umgebungsbereich näher als 50 Zentimeter, eine größere Skalierung oder Ortsauflösung (z.B. 5 cm → 1 cm) bewirkt als außerhalb des Umgebungsbereichs (z.B. 5 m → 5 cm) . Durch die nicht-lineare Skalierfunktion ergibt sich also eine andere Wertänderung des Größenparameters für dieselbe Rollstrecke des Fahrzeugs, beispielsweise eine Rollstrecke von 10 Zentimetern, je nachdem, ob sich das Kraftfahrzeug außerhalb des Nahbereichs oder innerhalb des Nahbereichs befindet. Innerhalb des Nahbereichs ist das graphische Abstandselement "sensibler", das heißt es erfolgt bei Zurücklegen einer bestimmten Rollstrecke (z.B. 10 cm) eine größere Wertänderung des Größenparameters als bei an einer Fahrzeugposition außerhalb des Nahbereichs.

Durch die Erfindung ergibt sich der Vorteil, dass einem Fahrer in dem Kraftfahrzeug der verbleibende Abstand des Kraftfahrzeugs zur Ankuppelposition mit einer abstandsadaptiven Ortsauflösung oder abstandsadaptiven Sensitivität dargestellt wird. Somit kann mittels des graphischen Abstandselements sowohl ein Abstandswert größer als beispielsweise 50 Zentimeter oder größer als 1 Meter signalisiert werden und dennoch im Nahbereich, wenn es darauf ankommt, das Kraftfahrzeug mit einer Genauigkeit von weniger als 10 Zentimetern, insbesondere weniger als 5 Zentimetern, zu manövrieren oder zu positionieren, dennoch eine Abstandsänderung mittels des graphischen Anzeigeelements mit vergrößerter Ortsauflösung angezeigt werden kann. Für den besonderen Fall, dass die Skalierfunktion zweistufig ist, wäre die Grenze des Nahbereichs im Übergangsbereich zwischen den zwei Stufen. Allgemein kann der Radius des Nahbereichs in einem Bereich von 20 Zentimeter bis 2 Meter liegen.

Die Erfindung umfasst auch Ausführungsformen, durch die sich zusätzliche Vorteile ergeben.

Gemäß einer Ausführungsform wird als Ortsauflösung für das Umrechnen des aktuellen Abstandswerts in den Wert des Größenparameters des graphischen Anzeigeelements ein Quotient oder ein Verhältnis einer Änderung des Größenparameters zu einer vorbestimmten Änderung des Abstands zugrunde gelegt. Beispielsweise kann also bei einer vorbestimmten Änderung von 10 Zentimetern des Abstandswerts eine Änderung des Größenparameters des Abstandselements um eine vorbestimmte Anzahl von Pixeln auf der Anzeigeeinrichtung vorgesehen sein, wobei die Anzahl der Pixel, um welche der Größenparameter geändert wird, im Nahbereich größer ist als außerhalb des Nahbereichs. Eine andere Beschreibung für die Ortsauflösung der nicht-linearen Skalierfunktion kann ein lokaler Gradient der Skalierfunktion sein, das heißt die Steigung der Skalierfunktion am Punkt des jeweiligen Abstandswerts. Der lokale Gradient ist innerhalb des Nahbereichs größer als außerhalb des Nahbereichs.

Eine Ausführungsform sieht vor, dass als die Skalierfunktion eine stetig differenzierbare Kurve vorgesehen wird. Mit anderen Worten ändert sich die Ortsauflösung kontinuierlich mit der Veränderung des Abstands zur Ankuppelposition. Hierdurch bekommt der Fahrer einen kontinuierlichen Übergang hin zur größeren oder vergrößerten Ortsauflösung dargeboten, sodass es keine ruckartige Umstellung gibt. Der erwähnte Nahbereich weist hier keine scharfe Grenze auf, sondern es ergibt sich ein gradueller Übergang. Es ist aber sichergestellt, dass sich ein Nahbereich definieren lässt, der die beschriebenen Bedingungen erfüllt. Alternativ dazu kann vorgesehen sein, dass als Skalierfunktion eine zwei- oder mehrstufige Umschaltfunktion vorgesehen wird. Mit anderen Worten ändert sich die Ortsauflösung sprunghaft immer dann, wenn das Kraftfahrzeug eine vorbestimmte Abstandsschwelle oder Stufe der Skalierfunktion bezüglich der Ankuppelposition erreicht. Hierdurch ergibt sich der Vorteil, dass die Ortsauflösung zwischen diesen Stufen konstant bleibt, d.h. die Skalierfunktion ein lineares Verhalten zeigt, und der Fahrer dann beim Wechsel zwischen zwei Stufen der Umschaltfunktion über die Veränderung der Skalierung oder Ortsauflösung informiert werden kann. Bei der Skalierfunktion ist bevorzugt eine abstandsbezogene Hysterese beim Umschalten zwischen den Stufen vorgesehen. Dies verhindert ein Flackern des Abstandsanzeigeelements.

Eine Ausführungsform sieht vor, dass als das graphische Abstandsanzeigeelement ein Bargraph, das heißt ein Abstandsbalken, oder ein Pfeil angezeigt wird. Als der Größenparameter wird in diesem Fall eine jeweilige Länge des Bargraphen oder des Pfeils eingestellt. Der Bargraph oder der Pfeil wird also beispielsweise umso kürzer, je näher sich das Kraftfahrzeug an der Ankuppelposition befindet. Wird dabei allerdings eine zwei- oder mehrstufige Umschaltfunktion als nicht-lineare Skalierfunktion vorgesehen, so kann vorgesehen sein, dass die Länge bei Erreichen der jeweiligen Abstandsschwelle oder Stufe wieder sprunghaft verlängert wird. Je nach aktueller Ortsauflösung, wie sie durch die nicht-lineare Skalierfunktion in Abhängigkeit vom Abstand definiert oder vorgegeben ist, verändert sich dann bei einer Bewegung des Kraftfahrzeugs die Länge pro zurückgelegter Fahrstrecke unterschiedlich.

Eine Ausführungsform sieht vor, dass das graphische Abstandsanzeigeelement angezeigt wird, während der Fahrer zumindest eine Längsführung des Kraftfahrzeugs durchführt. Das Anzeigeelement gibt dem Fahrer somit während der Längsführung eine Orientierung darüber, ob der Fahrer weiterfahren soll und beschleunigen oder bremsen soll. Wie bereits ausgeführt, kann der Fahrer optional auch eine Querführung (Lenken) durchführen, was allerdings auch durch eine Steuervorrichtung eines Fahrerassistenzsystems vorgenommen werden kann.

Eine Ausführungsform sieht vor, dass durch die Bedienvorrichtung eine absolute Fahrgeschwindigkeit oder eine relative Fahrgeschwindigkeit bezüglich der Ankoppelposition ermittelt wird. Es wird also auch ermittelt, wie schnell sich das Kraftfahrzeug der Ankuppelposition nähert. Es wird dann überprüft, ob die jeweilige Fahrgeschwindigkeit größer als ein vorbestimmter Schwellenwert ist, wodurch sich ein Prüfergebnis betreffend die Fahrgeschwindigkeit und den Schwellenwert ergibt. Durch die Bedienvorrichtung wird dann in Abhängigkeit von diesem Prüfergebnis ein von dem Größenparameter verschiedener weiterer Ausgabeparameter des graphischen Abstandsanzeigeelements und/oder eines weiteren auf der Anzeigeeinrichtung angezeigten graphischen Elements (beispielsweise einer Warnleuchte), und/oder einer akustischen Ausgabe, beispielsweise eines Signaltons, eingestellt. Ist die Fahrgeschwindigkeit also größer als der Schwellenwert, so ergibt sich ein anderer Wert des Ausgabeparameters als für den Fall, dass die Fahrgeschwindigkeit kleiner als der Schwellenwert ist. Der Ausgabeparameter kann beispielsweise die Farbe des Abstandsanzeigeelements oder des anderen graphischen Elements sein. In Bezug auf die akustische Aufgabe kann der Ausgabeparameter beispielsweise eine Intervalldauer oder Pulsdauer eines gepulsten Tones und/oder eine Tonhöhe und/oder überhaupt eine Tonaktivität (an/aus) sein. Der Fahrer erfährt somit in vorteilhafter Weise, ob er sich zu schnell (größer als der Schwellenwert) an die Ankuppelposition annähert.

Eine Ausführungsform sieht vor, dass der besagte Schwellenwert in Abhängigkeit von dem ermittelten Abstandswert eingestellt wird. Mit anderen Worten ist die Definition "zu schnell" abhängig vom Abstand des Kraftfahrzeugs zur Ankuppelposition. Hierdurch kann in vorteilhafter Weise eine zügige Annäherung ohne Warnung erreicht werden und dennoch, beispielsweise im Nahbereich, ein geringerer Schwellenwert zugrunde gelegt werden.

Eine Ausführungsform sieht vor, dass in Abhängigkeit von der ermittelten jeweiligen Fahrgeschwindigkeit und dem ermittelten Abstandswert überprüft wird, ob die jeweilige Fahrgeschwindigkeit voraussichtlich zukünftig innerhalb eines vorbestimmten Zeitraums größer als der Schwellenwert sein wird. Dies kann beispielsweise Sinn machen, wenn der Schwellenwert abhängig von dem Abstandswert eingestellt wird und somit selbst bei gleichbleibender Geschwindigkeit der Schwellenwert bei Annäherung an die Ankuppelposition kleiner wird und somit ab einem bestimmten Abstandswert die Fahrgeschwindigkeit unterschreitet. Unter Annahme einer konstanten oder gleichbleibenden zukünftigen Fahrgeschwindigkeit kann dieser Zeitpunkt ermittelt werden. Somit ergibt sich ein weiteres Prüfergebnis, welches angibt, ob die Fahrgeschwindigkeit voraussichtlich innerhalb eines vorgegebenen Zeitraums größer als der Schwellenwert sein wird. Dieses weitere Prüfergebnis wird dazu genutzt, den besagten weiteren Aufgabeparameter einzustellen. Der Fahrer wird also darüber informiert, dass die Fahrgeschwindigkeit "bald zu hoch" sein wird. Hierdurch ergibt sich der Vorteil, dass eine Reaktionszeit des Fahrers mit berücksichtigt werden kann. Der Zeitraum kann beispielsweise in einem Bereich von 0,5 Sekunden bis 10 Sekunden liegen.

Eine Ausführungsform sieht vor, dass als die Ankuppelposition eine Relativlage des Kraftfahrzeugs zu dem Anhänger festgelegt wird, bei welcher eine Klaue oder Kugel oder allgemein ein Ankuppelmechanismus einer Anhängerdeichsel des Anhängers senkrecht über der Anhängerkupplung des Kraftfahrzeugs angeordnet ist, insbesondere senkrecht über einem Kugelkopf der Anhängerkupplung. Somit kann in der besagten Weise in vorteilhafter Weise das Ankuppeln schon dadurch abgeschlossen werden, indem die Anhängerdeichsel abgesenkt wird, ohne dass hierbei der Anhänger gerollt oder um seine Hochachse gedreht werden muss.

Eine Ausführungsform sieht vor, dass die Zielkoordinaten der Anhängerkupplung durch eine Bildverarbeitung ermittelt werden, welche einmal oder wiederholt aus zumindest einer Kamera, beispielsweise einer Rückfahrkamera, jeweils zumindest ein Kamerabild empfängt und in dem zumindest einen Kamerabild eine vorbestimmte Komponente des Anhängers erkennt, beispielsweise dessen Anhängerdeichsel oder die Klaue oder den Ankuppelmechanismus der Anhängerdeichsel. Es wird dann in dem zumindest einen Kamerabild eine Relativposition des Kraftfahrzeugs zu dieser erkannten Komponente ermittelt und aus der ermittelten Relativposition werden dann die Zielkoordinaten ermittelt. Die vorbestimmte Komponente kann beispielsweise durch die Bildverarbeitung mittels einer Formerkennung oder durch eine Korrelation mit einem in der Bildverarbeitung gespeicherten Abbild der zu erkennenden Komponente durchgeführt werden. Die Bildverarbeitung weist den Vorteil auf, dass der Benutzer die Zielkoordinaten nicht selbst bestimmen oder eingeben muss.

Eine Ausführungsform sieht vor, dass für eine Auswahl des Anhängers in einer Umgebung des Kraftfahrzeugs mittels der Anzeigeeinrichtung zumindest ein Kamerabild der Umgebung angezeigt wird. Das Kamerabild kann beispielsweise mittels der besagten Rückfahrkamera erzeugt werden. Es wird dann eine Benutzerauswahl eines Bildbereichs des zumindest einen Kamerabilds empfangen. Den Bildbereich kann der Nutzer beispielsweise durch Antippen des zumindest einen Kamerabilds auf der Anzeigeeinrichtung festlegen. Der Bildbereich wird dann zum Ermitteln der Ankuppelposition zugrunde gelegt. Hierdurch ergibt sich der Vorteil, dass bei mehreren Anhängern in der Umgebung des Kraftfahrzeugs der Bedienvorrichtung mitgeteilt werden soll, an welchen der Anhänger das Kraftfahrzeug heran manövriert werden kann. Während sich das Kraftfahrzeug dem Anhänger dann nähert, kann durch eine weitere Benutzerauswahl, beispielsweise eine Wischgeste, der ausgewählte Bildbereich korrigiert oder verschoben werden. Hierdurch wird dem Umstand Rechnung getragen, dass bei Annäherung die Bildauflösung verbessert oder vergrößert ist, sodass ein Benutzer den Bildbereich noch einmal genauer positionieren kann.

Durch die Erfindung ist auch die besagte Bedienvorrichtung umfasst, die eine Recheneinrichtung aufweist, die dazu eingerichtet ist, eine Ausführungsform des erfindungsgemäßen Verfahrens durchzuführen. Die Recheneinrichtung kann beispielsweise auf der Grundlage eines Mikroprozessors oder eines Mikrocontrollers gebildet sein. Das Verfahren kann als ein Programmcode für die Recheneinrichtung realisiert sein. Die Bedienvorrichtung kann als ein Infotainmentsystem oder ein Steuergerät des Kraftfahrzeug oder auf der Grundlage eines mobilen Endgeräts, z.B. eines Smartphones oder eines Tablet-PCs realisiert sein.

Die Erfindung umfasst auch ein Kraftfahrzeug, welches eine Ausführungsform der erfindungsgemäßen Bedienvorrichtung aufweist. Das Kraftfahrzeug kann beispielsweise als ein Personenkraftwagen oder Lastkraftwagen oder auch als ein Landwirtschaftsgerät ausgestaltet sein. Der Fahrer muss sich nicht im Kraftfahrzeug befinden, während er die Längsführung des Kraftfahrzeugs durchführt. Der Fahrer kann auch beispielsweise mittels einer Fernsteuerung die Längsführung des Kraftfahrzeugs durchführen. Die Anzeigeeinrichtung kann dann beispielsweise eine mobile Bedieneinheit des Kraftfahrzeugs sein, die der Fahrer mit aus dem Kraftfahrzeug herausnehmen kann.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs und eines Anhängers;
- Fig. 2: eine schematische Darstellung des Kraftfahrzeugs und des Anhängers, wobei sich das Kraftfahrzeug in einer Ankuppelposition befindet;
- Fig. 3: eine schematische Darstellung eines Anzeigeinhalts einer Anzeigeeinrichtung, wie er zum Empfangen einer Benutzereingabe dargestellt werden kann;
- Fig. 4: eine schematische Darstellung eines Anzeigeinhalts einer Anzeigeeinrichtung, wie er sich während einer Annäherung des Kraftfahrzeugs an die Ankuppelposition ergeben kann;
- Fig. 5: ein Diagramm mit einer nicht-linearen Skalierfunktion zum Einstellen eines Größenparameters eines graphischen Abstandsanzeigeelements des Anzeigeinhalts von Fig. 4;
- Fig. 6: ein Diagramm mit einer weiteren nicht-linearen Skalierfunktion für das Abstandsanzeigeelement von Fig. 4;
- Fig. 7: eine schematische Darstellung eines alternativen Abstandsanzeigeelements; und
- Fig. 8: ein Flussschaudiagramm einer Ausführungsform des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

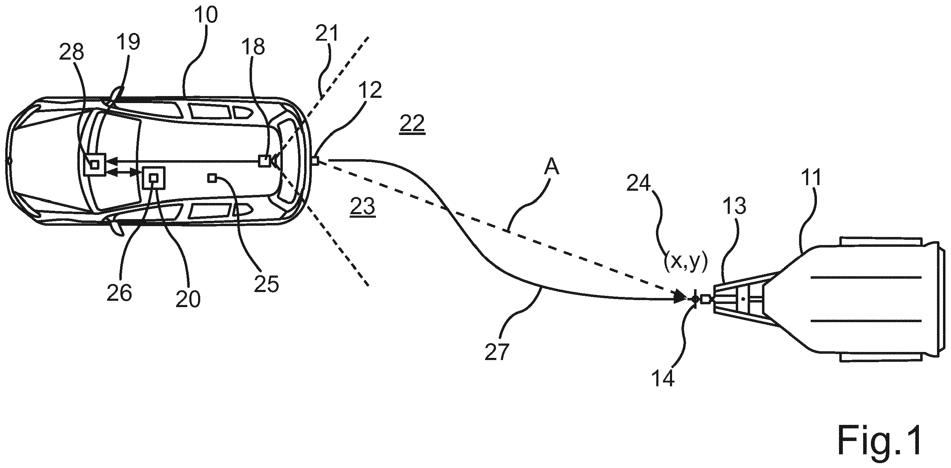

Fig. 1 zeigt ein Kraftfahrzeug 10, bei dem es sich beispielsweise um einen Kraftwagen oder ein Landwirtschaftsgerät handeln kann. Fig. 1 zeigt des Weiteren einen Anhänger 11, der an das Kraftfahrzeug 10 angekuppelt werden kann, wozu das Kraftfahrzeug 10 beispielsweise eine Anhängerkupplung 12 aufweisen kann, an welche beispielsweise eine Anhängerdeichsel 13 des Anhängers 11 angekuppelt werden kann, damit so insgesamt der Anhänger 11 mit dem Kraftfahrzeug 10 verbunden ist und von diesem geschleppt werden kann.

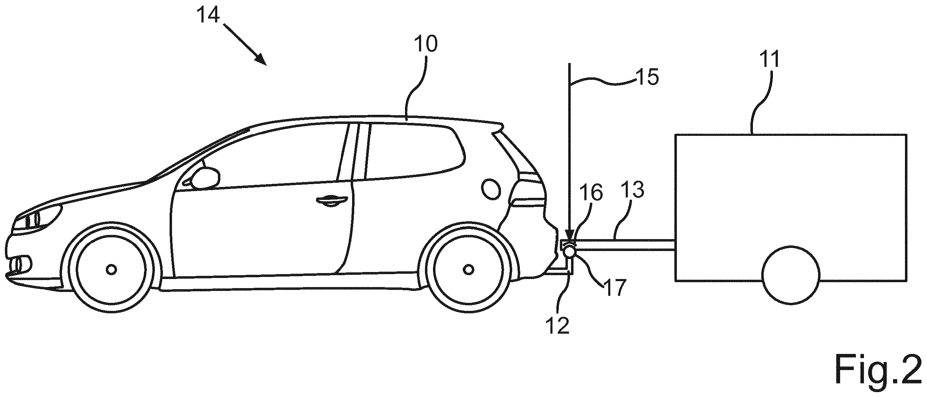

Damit der Anhänger 11 nicht zum Kraftfahrzeug 10 hin bewegt werden muss, kann ein Fahrer (nicht dargestellt) des Kraftfahrzeugs 10 das Kraftfahrzeug 10 an den Anhänger 11 so weit heranführen oder heran manövrieren, bis das Kraftfahrzeug 10 eine Ankuppelposition 14 erreicht hat, die in Fig. 2 genauer veranschaulicht ist.

Fig. 2 zeigt die Ankuppelposition 14, in welcher das Kraftfahrzeug 10 relativ zum Anhänger 11 derart angeordnet oder positioniert ist, dass durch senkrechtes Absenken 15 der Deichsel 13 auf die Anhängerkupplung 12 das Ankuppeln des Anhängers 11 an das Kraftfahrzeug 10 durchgeführt oder vollzogen werden kann. Hierzu kann beispielsweise eine Klaue 16 der Anhängerdeichsel 13 senkrecht über einen Kugelkopf 17 der Anhängerkupplung 12 positioniert sein.

Fig. 1 veranschaulicht des Weiteren, wie der Fahrer beim Manövrieren des Kraftfahrzeugs 10 unterstützt werden kann, indem das Kraftfahrzeug 10 eine Kamera 18, eine Bedienvorrichtung 19 und eine Anzeigeeinrichtung 20 aufweisen kann. Die Anzeigeeinrichtung 20 kann beispielsweise ein Bildschirm eines Kombiinstruments oder einer Mittelkonsole des Kraftfahrzeugs 10 sein. Ein Erfassungsbereich 21 der Kamera 18 kann in eine Umgebung 22 des Kraftfahrzeugs 10 zu einem Heckbereich 23 hin ausgerichtet sein, sodass mit dem Erfassungsbereich 21 die Anhängerdeichsel 13 erfasst oder gefilmt werden kann, während sich das Kraftfahrzeug 10 an die Ankuppelposition 14 rückwärts annähert. Die Bedienvorrichtung 19 kann Zielkoordinaten 24 der Ankuppelposition 14 beispielsweise auf der Grundlage zumindest eines Kamerabilds 25 der Kamera 18 ermitteln. Die Bedienvorrichtung 19 kann die Zielkoordinaten 24 auch beispielsweise aus einem anderen Steuergerät empfangen. Die Bedienvorrichtung 19 kann dem Fahrer mittels oder über die Anzeigeeinrichtung 20 ein graphisches Abstandsanzeigeelement 26 darstellen, welches den Fahrer über einen verbleibenden Abstand A des Kraftfahrzeugs 10 zur Ankuppelposition 14 informiert. Der Abstand A kann als ein direkter Abstand (euklidischer Abstand) gemessen sein oder als eine Weglänge einer geplanten Anfahrstrecke 27. Im Folgenden wird beispielhaft vom euklidischen Abstand ausgegangen. Beispielsweise kann vorgesehen sein, dass der Fahrer die Längsführung des Kraftfahrzeugs 10 durchführt, während eine Steuervorrichtung des Kraftfahrzeugs 10 die Querführung durchführt, sodass der Verlauf der Anfahrstrecke 27 bekannt ist und somit auch deren Weglänge ermittelt werden kann. Um den Abstand A zu ermitteln, kann eine Bildverarbeitung 28 in dem zumindest einen Kamerabild 25 die Deichsel 13 erkennen und daraufhin den Abstand A und/oder die Zielkoordinaten 24 ermitteln.

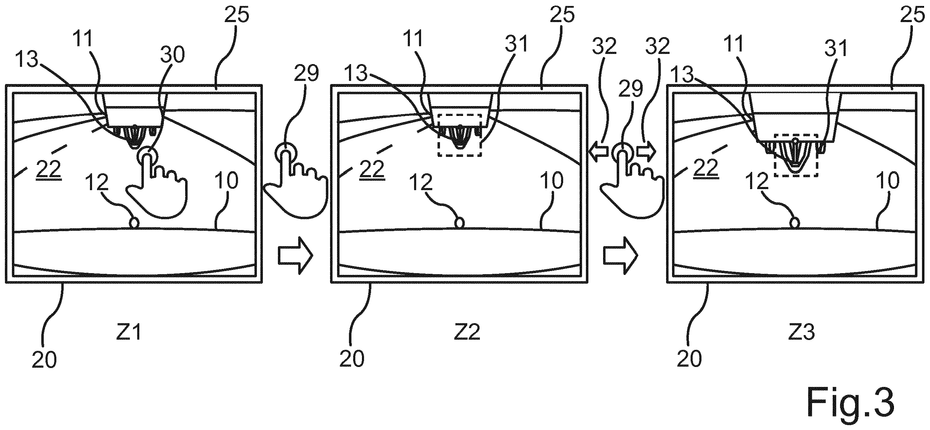

Fig. 3 veranschaulicht, wie der Fahrer die Bildverarbeitung 28 beim Auswählen und/oder Erkennen der Anhängerdeichsel 13 unterstützen kann. Dem Fahrer kann mittels der Anzeigeeinrichtung 20 das zumindest eine Kamerabild 25 angezeigt werden. Fig. 3 veranschaulicht drei unterschiedliche Anzeigezustände Z1, Z2, Z3 der Anzeigeeinrichtung 20 mit drei unterschiedlichen Kamerabildern 25, die sich darin unterscheiden, dass der Anhänger 11 einen unterschiedlichen Abstand A zum Kraftfahrzeug 10 aufweist. Bei größter Entfernung (Anzeigezustand Z1) kann der Fahrer beispielsweise mit einem Finger 29 auf der Anzeigeeinrichtung 20 einen Bildbereich 30 markieren oder auswählen, der der Bildverarbeitung 28 signalisiert, dass die Zielkoordinaten 24 des in dem Bildbereich 30 ausgewählten Bereichs der Umgebung 22 zugrunde gelegt werden sollen. Danach kann ein automatisches Tracking 31 bei einer Bewegung des Kraftfahrzeugs 10 den ausgewählten Bildbereich 30 im jeweils aktuellen Kamerabild 25 erfolgen (Anzeigezustand Z2). Der Benutzer kann dann beispielsweise wieder mit dem Finger 29 Korrekturen 32 der Position des Bildbereichs vornehmen, wenn sich das Kraftfahrzeug 10 der Anhängerdeichsel 13 genähert hat und somit die Anhängerdeichsel 13 genauer in dem Kamerabild 25 erkennbar ist. Danach kann das korrigierte Tracking 31 fortgesetzt werden (Anzeigezustand Z3).

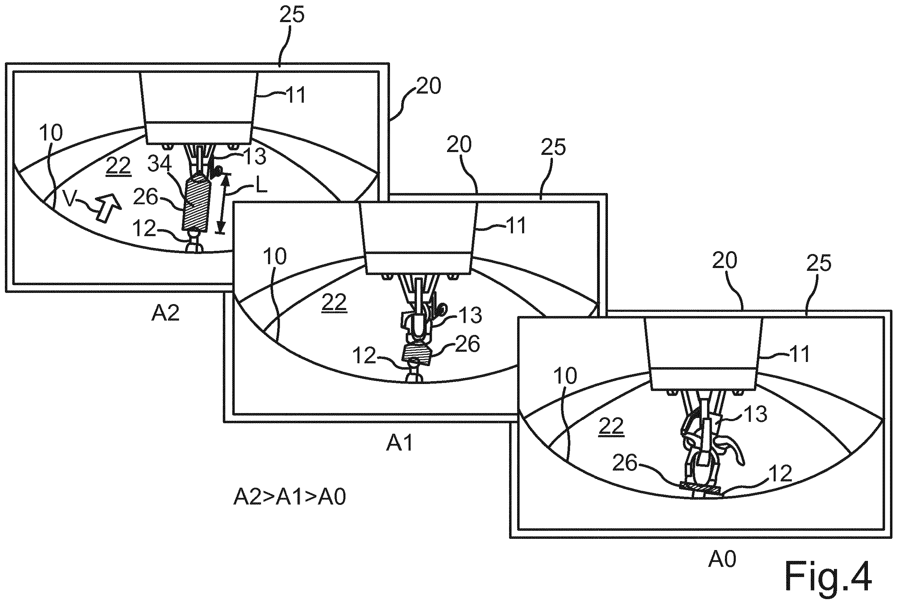

Fig. 4 veranschaulicht, wie für unterschiedliche Abstandswerte A0, A1, A2 des Abstands A dem Fahrer beispielsweise durch Einblenden des Abstandsanzeigeelements 26 in das jeweils angezeigte Kamerabild 25 der verbleibende Abstand A veranschaulicht werden kann. Hierbei ist davon ausgegangen, dass folgende Relation der Abstandswerte gilt: A2 > A1 > A0, wobei A0 das Erreichen der Ankuppelposition 14 darstellt (A0 = 0 m). Das Abstandsanzeigeelement 26 kann beispielsweise als ein Pfeil, ein sogenannter Schwellpfeil, realisiert sein. Eine Länge 33 des Abstandsanzeigeelements 26 stellt dabei einen einstellbaren oder von der Bedienvorrichtung 19 eingestellten Größenparameter des Abstandsanzeigeelements 26 dar. Eine Farbe 34 (in Fig. 4 durch eine Schraffur repräsentiert) kann ein Prüfergebnis betreffend die Fahrgeschwindigkeit V angeben und symbolisieren, ob die Fahrgeschwindigkeit V in Ordnung ist, zu groß ist oder innerhalb einer vorbestimmten Zeitdauer zu groß sein wird, wenn sie beibehalten wird.

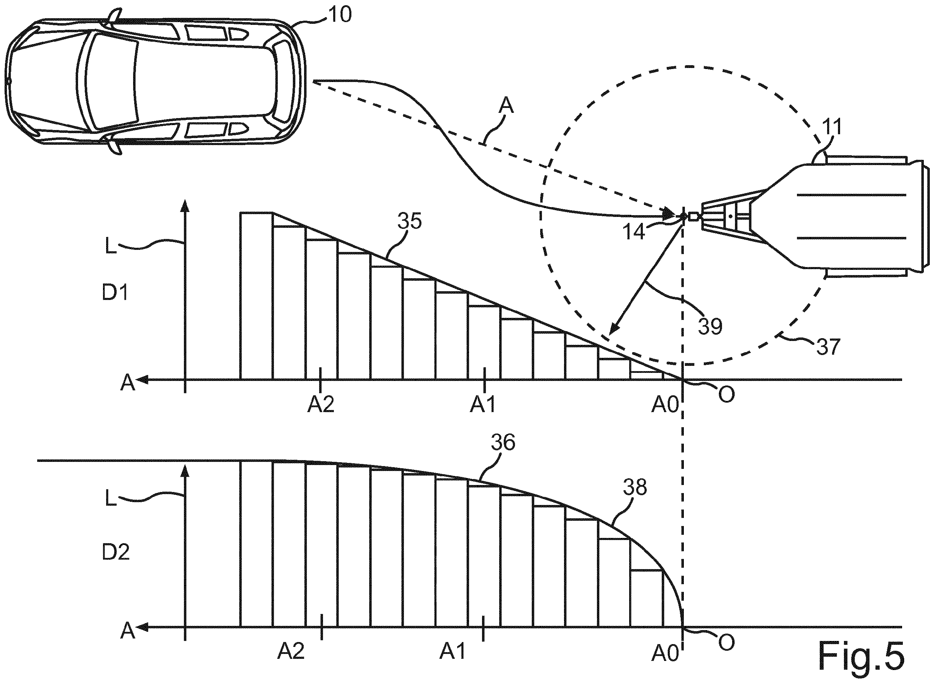

Fig. 5 veranschaulicht, wie die Länge 33 als Größenparameter in Abhängigkeit vom Abstandswert A0, A1, A2 des Abstands A eingestellt werden kann. Fig. 5 veranschaulicht hier noch einmal die Fahrsituation gemäß Fig. 1. In einem ersten Diagramm D1 ist der Fall aus dem Stand der Technik veranschaulicht, bei welchem die Länge 33 durch eine lineare Skalierfunktion 35 kontinuierlich proportional zum Abstandswert des Abstands A kleiner wird. Ein Diagramm D2 veranschaulicht dagegen, wie bei der Bedienvorrichtung 19 eine nicht-lineare Skalierfunktion 36 den Abstandswert des Abstands A auf die Länge L nicht-linear abbildet oder umgerechnet, sodass sich insbesondere in einem Nahbereich 37 um die Ankuppelposition 14 herum eine größere Ortsauflösung als außerhalb des Nahbereichs 37 ergibt. Beispielhaft sind die konkreten Abstandswerte A0, A1, A2 in den Diagrammen dargestellt. Bei der in Fig. 5 veranschaulichten, stetig differenzierbaren Kurve 38 nimmt die Ortsauflösung dabei kontinuierlich zu. Es kann vorgesehen sein, dass sich ein Nahbereich 37 mit einem Radius 39 ergibt, der in einem Bereich von 20 Zentimetern bis 2 Metern liegt.

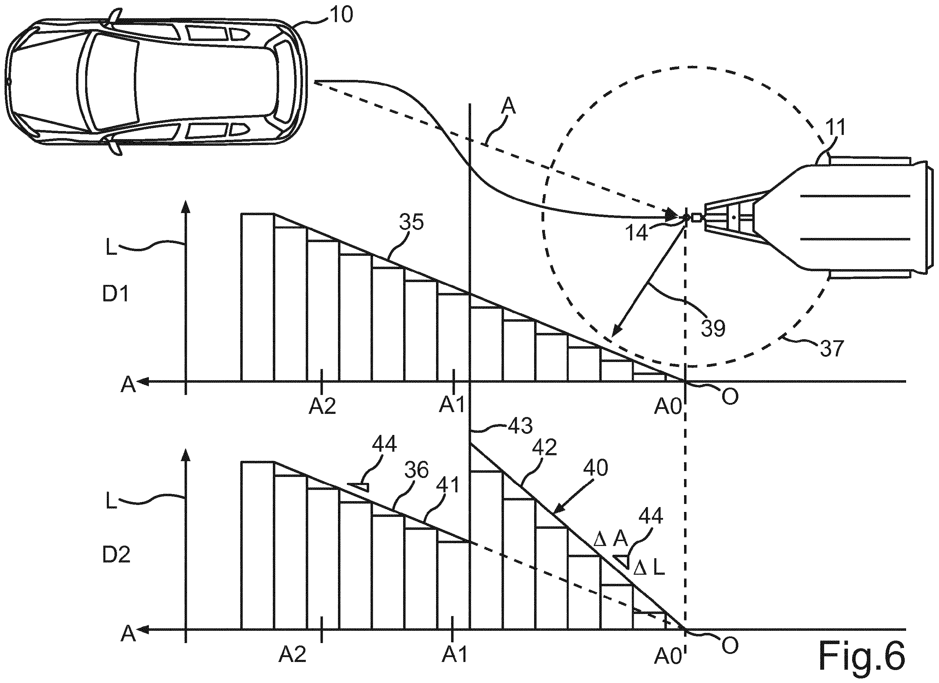

Fig. 6 veranschaulicht im Unterschied dazu in einem Diagramm D2 eine nicht-lineare Skalierfunktion 36, die als zweistufige Skalierfunktion 40 ausgestaltet ist, sodass sich zwei Stufen 41, 42 der Ortsauflösung ergeben. Diagramm D1 entspricht Diagramm D1 von Fig. 5. Bei Erreichen der Grenze des hier diskreten Nahbereichs 37 wird von der ersten Stufe 41 auf die zweite Stufe 42 umgeschaltet, sodass sich ein Sprung 43 in der Skalierung des Abstandsanzeigeelements 26 ergibt. Die Ortsauflösung kann allgemein beispielsweise ein lokaler Gradient oder eine lokale Steigung 44 der Skalierfunktion 36 sein. Zwischen den zwei Stufen 41, 42 wird also der Gradient 44 betragsmäßigen vergrößert. Der Gradient 44 kann z.B. als Quotient ΔL / ΔA definiert sein, also ein Verhältnis einer Änderung ΔL der Größenparameters L zu einer vorbestimmten Änderung ΔA des Abstands A angeben, wobei ΔA in einem Bereich von 10cm bis 1m liegen kann. Die Berechnung kann auch relativ erfolgen, z.B. als prozentuale Veränderung.

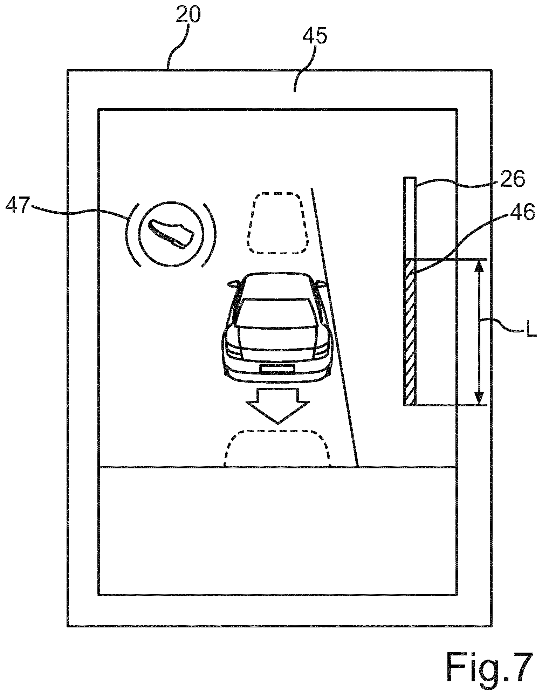

Fig. 7 veranschaulicht einen alternativen Anzeigeinhalt 45 für die Anzeigeeinrichtung 20, bei welchem kein Kamerabild 25 nötig ist. Das Abstandsanzeigeelement 26 kann als ein Bargraph 46 ausgestaltet sein, dessen Länge L den Größenparameter darstellt, der durch die Bedienvorrichtung 19 in Abhängigkeit vom Abstand A eingestellt wird. Auch hierfür kann eine nicht-lineare Skalierfunktion 36 zugrunde gelegt werden, um den aktuellen Abstandswert in den Wert der Länge L umzurechnen.

Es kann ein weiteres graphisches Element 47 vorgesehen sein, welches in der dargestellten Farbe verändert werden kann, falls die Fahrgeschwindigkeit V des Kraftfahrzeugs 10 oberhalb des beschriebenen Schwellenwerts liegt.

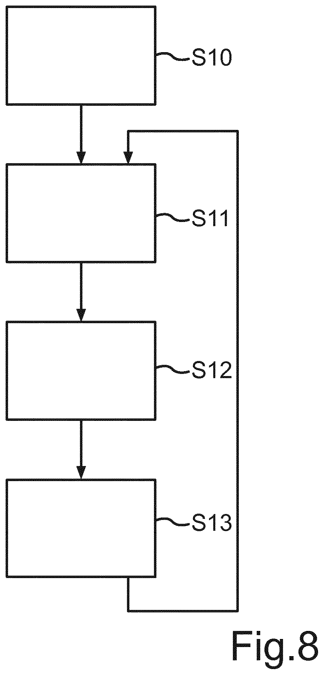

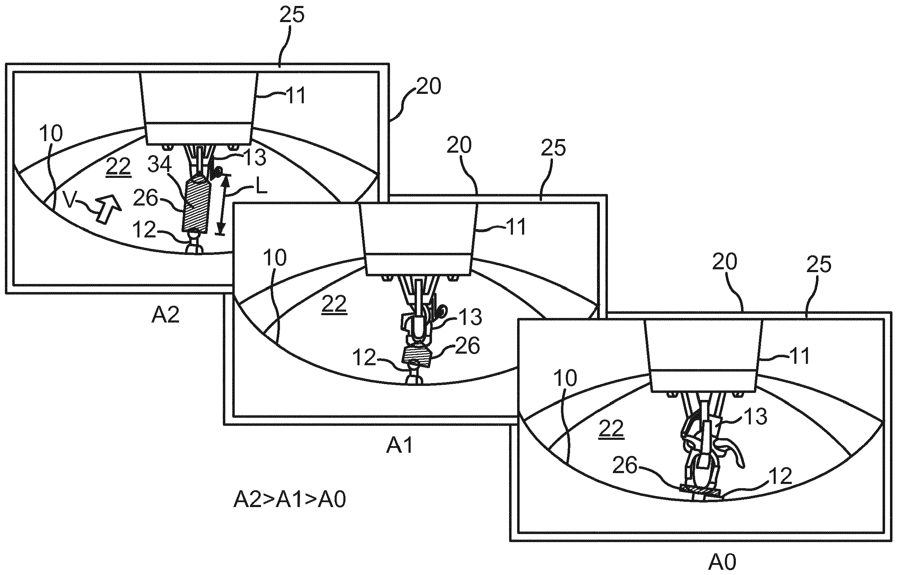

Fig. 8 veranschaulicht nochmals die beschriebenen Schritte des durch die Bedienvorrichtung 19 durchführbaren Verfahrens.

In einem Schritt S10 können durch die Bedienvorrichtung 19 die Zielkoordinaten 24 der Ankuppelposition 14 ermittelt werden, also beispielsweise empfangen werden oder selbst berechnet werden. In einem Schritt S11 kann mittels der Anzeigeeinrichtung 20 dem Fahrer das graphische Abstandsanzeigeelement 26 angezeigt werden. In einem Schritt S12 kann der aktuelle Abstandswert des Abstands A des Kraftfahrzeugs 10 zu der Ankuppelposition 14 ermittelt werden. In einem Schritt S13 kann zu dem ermittelten Abstandswert des Abstands A mittels der nicht-linearen Skalierfunktion 36 ermittelt werden, welchen Wert der Größenparameter des Abstandsanzeigeelements 26, beispielsweise dessen Länge L, aufweisen soll. Daraufhin kann wieder im Schritt S11 wiederholt das Abstandsanzeigeelement 26 mit dem aktualisierten Wert des Größenparameters, also beispielsweise der Länge L, angezeigt werden und wieder mit dem Schritt S12 fortgefahren werden.

Der so gebildete Anhängerankuppelassistent (AAA) hilft, indem mittels Bildverarbeitung die Deichsel automatisch erkannt wird und ein Abstand zur Deichsel graphisch veranschaulicht wird.

Für den Fall, dass der Fahrer noch zu weit vom Anhänger entfernt steht, würde der AAA zunächst geradeaus rückwärtsfahren - bis die Bildverarbeitung den Anhänger detektiert hat. Der Fahrer kann aber das System unterstützen, indem er den Anhänger markiert (siehe Fig. 3).

Ein wesentlicher Aspekt ist es, dem Fahrer mitzuteilen, wie weit er noch fahren muss. Eine manuelle Bestimmung im Kamerabild ist schwierig: Befindet sich die Anhängerdeichsel in der idealen Ankuppelposition (Deichsel direkt über der Anhängerkupplungskugel), so ist je nach Kurbelstellung des Anhängers dieses aber nicht erkennbar. Das heißt der Fahrer würde dann z.B. zu weit fahren.

Die Lösung ist, dass das System automatisch die Restfahrstrecke ermittelt (Erkennung der Zielposition im Kamerabild, Transformation der Bildkoordinate in die Weltkoordinate) und dem Fahrer per Bedienvorrichtung (HMI - Human Machine Interfache, Mensch-Maschine-Schnittstelle) mitteilt. Hierbei sind 2 Varianten umsetzbar:
a) Schwellpfeil oder Bargraph im Kombiinstrument (Fig. 7)
b) Schwellpfeil als Overlay (Überlagerung) im Kamerabild (Fig. 4)

Insgesamt zeigt das Beispiel, wie durch die Erfindung eine Bedienvorrichtung zum Unterstützen eines Fahrers beim Ankuppeln eines Kraftfahrzeugs an einen Anhänger bereitgestellt werden kann.

### Bezugszeichenliste

- 10: Kraftfahrzeug
- 11: Anhänger
- 12: Anhängerkupplung
- 13: Anhängerdeichsel
- 14: Ankuppelposition
- 15: Senkrechte Bewegung
- 16: Anhängerklaue
- 17: Kuppelkopf
- 18: Kamera
- 19: Bedienvorrichtung
- 20: Anzeigeeinrichtung
- 21: Erfassungsbereich
- 22: Umgebung
- 23: Heckbereich
- 24: Zielkoordinaten
- 25: Kamerabild
- 26: Abstandsanzeigeelement
- 27: Anfahrstrecke
- 28: Bildverarbeitung
- 29: Finger
- 30: Bildbereich
- 31: Tracking
- 32: Verschiebebewegung
- 33: Länge
- 34: Farbe
- 35: Lineare Skalierfunktion
- 36: Nicht-lineare Skalierfunktion
- 37: Nahbereich
- 38: Kurve
- 39: Radius
- 40: Umschaltfunktion
- 41: Stufe
- 42: Stufe
- 43: Sprung
- 44: Lokaler Gradient
- 45: Anzeigeinhalt
- 46: Bargraph
- 47: Weiteres Anzeigeelement

- A: Abstand
- A0, A1, A2: Abstandswert
- D1, D2: Diagramm
- S10 - S13: Verfahrensschritt
- Z1 - Z3: Anzeigezustand

## Patentansprüche

1. Verfahren zum Betreiben einer Bedienvorrichtung (19) für ein Kraftfahrzeug (10), um einen Fahrer dabei zu unterstützen, das Kraftfahrzeug (10) zum Ankuppeln an einen Anhänger (11) an diesen heran zu manövrieren, wobei durch die Bedienvorrichtung (19) Zielkoordinaten (24) einer für das Kraftfahrzeug (10) zum Ankuppeln vorgesehenen Ankuppelposition (14) ermittelt werden und wiederholt, während mittels einer Anzeigeeinrichtung (20) dem Fahrer ein graphisches Abstandsanzeigeelement (26) angezeigt wird, ein aktueller Abstandswert (A0, A1, A2) eines Abstands (A) des Kraftfahrzeugs (10) zu der Ankuppelposition (14) ermittelt und ein vorbestimmter Größenparameter (L) des graphischen Abstandsanzeigeelements (26) in Abhängigkeit von dem aktuellen Abstandswert (A0, A1, A2) eingestellt wird,
**dadurch gekennzeichnet, dass**
für eine Umrechnung von dem jeweils ermittelten aktuellen Abstandswert (A0, A1, A2) in einen einzustellenden Wert des Größenparameters (L) eine nicht-lineare Skalierfunktion (36) verwendet wird, welche in zumindest einem vorbestimmten Nahbereich (37) um die Ankuppelposition (14) eine größere Ortsauflösung bewirkt als außerhalb des jeweiligen Nahbereichs (37).

2. Verfahren nach Anspruch 1, wobei als Ortsauflösung ein Quotient einer Änderung (ΔL) des Größenparameters (L) zu einer vorbestimmten Änderung (ΔA) des Abstands (A) zugrundegelegt wird.

3. Verfahren nach einem der vorhergehenden Ansprüche, wobei als Skalierfunktion (36) eine stetig differenzierbare Kurve (38) oder eine zwei- oder mehrstufige Umschaltfunktion (40) vorgesehen wird.

4. Verfahren nach einem der vorhergehenden Ansprüche, wobei als das graphische Abstandsanzeigeelement (26) ein Bargraph (46) oder ein Pfeil angezeigt wird und dessen jeweilige Länge als der Größenparameter (L) eingestellt wird.

5. Verfahren nach einem der vorhergehenden Ansprüche, wobei das graphische Abstandsanzeigeelement (26) angezeigt wird, während der Fahrer zumindest eine Längsführung des Kraftfahrzeugs (10) durchführt.

6. Verfahren nach einem der vorhergehenden Ansprüche, wobei durch die Bedienvorrichtung (19) eine absolute Fahrgeschwindigkeit und/oder eine relative Fahrgeschwindigkeit (V) bezüglich der Ankuppelposition (14) ermittelt wird und als ein Prüfergebnis ermittelt wird, ob die jeweilige Fahrgeschwindigkeit (V) größer als ein vorbestimmter Schwellenwert ist, und ein von dem Größenparameter (L) verschiedener weiterer Ausgabeparameter des graphischen Abstandsanzeigeelements (26) und/oder eines weiteren auf der Anzeigeeinrichtung (20) angezeigten graphischen Elements (47) und/oder einer akustischen Ausgabe in Abhängigkeit von dem Prüfergebnis eingestellt wird.

7. Verfahren nach Anspruch 6, wobei der Schwellenwert in Abhängigkeit von dem ermittelten Abstandswert (A0, A1, A2) eingestellt wird.

8. Verfahren nach Anspruch 6 oder 7, wobei in Abhängigkeit von der ermittelten jeweiligen Fahrgeschwindigkeit (V) und dem ermittelten Abstandswert (A0, A1, A2) als ein weiteres Prüfergebnis ermittelt wird, ob die jeweilige Fahrgeschwindigkeit (V) voraussichtlich innerhalb eines vorbestimmten Zeitraums größer als der Schwellenwert sein wird, und der Ausgabeparameter in Abhängigkeit von dem weiteren Prüfergebnis eingestellt wird.

9. Verfahren nach einem der vorhergehenden Ansprüche, wobei als die Ankuppelposition (14) eine Relativlage des Kraftfahrzeugs (10) zu dem Anhänger (11) festgelegt wird, bei welcher ein Ankuppelmechanismus (16) einer Anhängerdeichsel (13) des Anhängers (11) senkrecht (15) über einer Anhängerkupplung (12) des Kraftfahrzeugs (10) angeordnet ist.

10. Verfahren nach einem der vorhergehenden Ansprüche, wobei die Zielkoordinaten (24) durch eine Bildverarbeitung (28) ermittelt werden, welche einmal oder wiederholt aus zumindest einer Kamera (18) jeweils zumindest ein Kamerabild (25) empfängt und in dem zumindest einen Kamerabild (25) eine vorbestimmte Komponente des Anhängers (11) erkennt und eine Relativposition des Kraftfahrzeugs (10) zu der Komponente ermittelt und aus der ermittelten Relativposition die Zielkoordinaten (24) ermittelt.

11. Verfahren nach einem der vorhergehenden Ansprüche, wobei für eine Auswahl des Anhängers (11) in einer Umgebung (22) der Kraftfahrzeugs (10) mittels der Anzeigeeinrichtung (20) zumindest ein Kamerabild (25) der Umgebung (22) angezeigt wird und eine Benutzerauswahl eines Bildbereichs (30) des zumindest einen Kamerabilds (25) empfangen wird und der Bildbereich (30) zum Ermitteln der Ankuppelposition (14) zugrunde gelegt wird.

12. Bedienvorrichtung (19) mit einer Recheneinrichtung, die dazu eingerichtet ist, ein Verfahren nach einem der vorhergehenden Ansprüche durchzuführen.

13. Kraftfahrzeug (10) mit einer Bedienvorrichtung (19) nach Anspruch 12.

## Claims

1. Method for operating an operating device (19) for a motor vehicle (10) to support a driver in maneuvering the motor vehicle (10) toward a trailer (11) to couple the former to the latter, wherein by the operating device (19), target coordinates (24) of a coupling position (14) provided for the vehicle (10) for coupling are determined, and, while a graphical distance-indicating element (26) is displayed to the driver by means of a display device (20), a current distance value (A0, A1, A2) of a distance (A) of the motor vehicle (10) from the coupling position (14) is repeatedly determined and a predetermined size parameter (L) of the graphical distance-indicating element (26) is set as a function of the current distance value (A0, A1, A2),
**characterized in that**
a non-linear scaling function (36) is used for converting the respectively determined current distance value (A0, A1, A2) into a value of the size parameter (L) to be set and produces a higher spatial resolution in at least one predetermined close range (37) around the coupling position (14) than outside of the respective close range (37).

2. Method according to Claim 1, wherein a quotient of a change (ΔL) of the size parameter (L) to a predetermined change (ΔA) of the distance (A) is used as a basis for the spatial resolution.

3. Method according to any of the preceding claims, wherein a continuously differentiable curve (38) or a two-stage or multi-stage switching function (40) is provided as the scaling function (36).

4. Method according to any of the preceding claims, wherein a bar graph (46) or an arrow is displayed as the graphical distance-indicating element (26), and the respective length thereof is set as the size parameter (L).

5. Method according to any of the preceding claims, wherein the graphical distance-indicating element (26) is displayed while the driver performs at least a longitudinal guidance of the motor vehicle (10).

6. Method according to any of the preceding claims, wherein the operating device (19) determines an absolute driving speed and/or a relative driving speed (V) with respect to the coupling position (14), and whether the respective driving speed (V) is greater than a predetermined threshold value is determined as a test result, and a further output parameter, differing from the size parameter (L), of the graphical distance-indicating element (26) and/or of a further graphical element (47) displayed on the display device (20) and/or of an acoustic output is set as a function of the test result.

7. Method according to Claim 6, wherein the threshold value is set as a function of the determined distance value (A0, A1, A2).

8. Method according to Claim 6 or 7, wherein, as a function of the determined respective driving speed (V) and the determined distance value (A0, A1, A2), whether it is expected that the respective driving speed (V) will be greater than the threshold value within a predetermined time frame is determined as a further test result, and the output parameter is set as a function of the further test result.

9. Method according to any of the preceding claims, wherein a relative position of the motor vehicle (10) with respect to the trailer (11) where a coupling mechanism (16) of a trailer hitch (13) of the trailer (11) is arranged perpendicularly (15) above a trailer coupling (12) of the motor vehicle (10) is determined as the coupling position (14).

10. Method according to any of the preceding claims, wherein the target coordinates (24) are determined by image processing (28) which receives at least one camera image (25) once or repeatedly from at least one camera (18), and detects a predetermined component of the trailer (11) in the at least one camera image (25), and determines a relative position of the motor vehicle (10) with respect to the component, and determines the target coordinates (24) from the determined relative position.

11. Method according to any of the preceding claims, wherein, for a selection of the trailer (11) in surroundings (22) of the motor vehicle (10), at least one camera image (25) of the surroundings (22) is displayed by means of the display device (20), and a user selection of an image region (30) of the at least one camera image (25) is received, and the image region (30) is used as a basis for the determination of the coupling position (14).

12. Operating device (19) having a computing device which is configured to carry out a method according to any of the preceding claims.

13. Motor vehicle (10) having an operating device (19) according to Claim 12.

## Revendications

1. Procédé de fonctionnement d'un dispositif de commande (19) pour un véhicule automobile (10), pour aider un conducteur à manœuvrer le véhicule automobile (10) vers une remorque (11) en vue de l'attelage à celle-ci, dans lequel le dispositif de commande (19) détermine des coordonnées cibles (24) d'une position d'attelage (14), prévue pour l'attelage, pour le véhicule automobile (10) et détermine de manière répétée, pendant qu'un dispositif d'affichage (20) montre au conducteur un élément graphique d'affichage de distance (26), une valeur de distance réelle (A0, A1, A2) d'une distance (A) du véhicule automobile (10) par rapport à la position d'attelage (14) et règle un paramètre de grandeur (L) prédéterminé de l'élément graphique d'affichage de distance (26) en fonction de la valeur de distance réelle (A0, A1, A2),
**caractérisé en ce**
**qu'**une fonction de mise à l'échelle (36) non linéaire est utilisée pour la conversion de la valeur de distance réelle (A0, A1, A2)respectivement déterminée en une valeur à régler du paramètre de grandeur (L), laquelle fonction provoque, dans au moins une zone proche (37) prédéterminée autour de la position d'attelage (14), une résolution spatiale plus grande qu'en dehors de la zone proche (37) respective.

2. Procédé selon la revendication 1, dans lequel un quotient d'une modification (ΔL) du paramètre de grandeur (L) à une modification (ΔA) prédéterminée de la distance (A) est à la base de la résolution spatiale.

3. Procédé selon l'une quelconque des revendications précédentes, dans lequel une courbe différenciable en continu (38) ou une fonction de commutation (40) à deux ou plusieurs niveaux est prévue comme fonction de mise à l'échelle (36).

4. Procédé selon l'une quelconque des revendications précédentes, dans lequel un graphique à barres (46) ou une flèche est affiché(e) en tant qu'élément graphique d'affichage de distance (26), dont la longueur respective est réglée comme paramètre de grandeur (L).

5. Procédé selon l'une quelconque des revendications précédentes, dans lequel l'élément graphique d'affichage de distance (26) est affiché pendant que le conducteur effectue au moins un guidage longitudinal du véhicule automobile (10).

6. Procédé selon l'une quelconque des revendications précédentes, dans lequel le dispositif d'utilisation (19) détermine une vitesse de déplacement absolue et/ou une vitesse de déplacement relative (V) par rapport à la position d'attelage (14) et détermine, comme résultat de test, si la vitesse de déplacement (V) respective est supérieure à une valeur seuil prédéterminée et règle un autre paramètre de sortie, différent du paramètre de grandeur (L), de l'élément graphique d'affichage de distance (26) et/ou un autre élément graphique (47) affiché sur le dispositif d'affichage (20) et/ou une sortie acoustique en fonction du résultat du test.

7. Procédé selon la revendication 6, dans lequel la valeur seuil est réglée en fonction de la valeur de distance (A0, A1, A2) déterminée.

8. Procédé selon la revendication 6 ou 7, dans lequel, en fonction de la vitesse de déplacement (V) respective déterminée et de la valeur de distance (A0, A1, A2) déterminée, il est déterminé comme autre résultat de test si la vitesse de déplacement (V) respective sera probablement supérieure à la valeur seuil en une période de temps prédéterminée et le paramètre de sortie est réglé en fonction de l'autre résultat de test.

9. Procédé selon l'une quelconque des revendications précédentes, dans lequel une position relative du véhicule automobile (10) par rapport à la remorque (11) est fixée comme position d'attelage (14), dans laquelle un mécanisme d'attelage (16) d'un timon (13) de la remorque (11) est disposé verticalement (15) au-dessus d'un attelage de remorque (12) du véhicule automobile (10).

10. Procédé selon l'une quelconque des revendications précédentes, dans lequel les coordonnées cibles (24) sont déterminées par un traitement d'image (28) qui reçoit, une fois ou de manière répétée, respectivement au moins une image de caméra (25) provenant d'au moins une caméra (18) et qui détecte dans ladite au moins une image de caméra (25) un élément prédéfini de la remorque (11) et qui détermine une position relative du véhicule automobile (10) par rapport à l'élément et qui détermine, à partir de la position relative déterminée, les coordonnées cibles (24).

11. Procédé selon l'une quelconque des revendications précédentes, dans lequel, pour une sélection de la remorque (11) dans un environnement (22) du véhicule automobile (10), au moins une image de caméra (25) de l'environnement (22) est affichée au moyen du dispositif d'affichage (20) et une sélection d'utilisateur d'une zone d'image (30) de ladite au moins une image de caméra (25) est reçue et la zone d'image (30) est utilisée comme base pour la détermination de la position d'attelage (14).

12. Dispositif de commande (19) pourvu d'un système de calcul qui est conçu pour mettre en œuvre un procédé selon l'une quelconque des revendications précédentes.

13. Véhicule (10) présentant un dispositif de commande (19) selon la revendication 12.
